# EUROPEAN PATENT APPLICATION

(11) **EP 4 407 361 A1**
(43) Date of publication of application: **31.07.2024**
(21) Application number: 21958491.9
(22) Date of filing: 28.09.2021
(51) Int. Cl.: G02B 27/01, G02B 27/28, G02B 5/30, G02B 5/08, B60K 35/00

(54) **HEAD-UP DISPLAY**

(30) Priority: 23.09.2021 KR 20210125744
(71) Applicant: LG Electronics Inc., Yeongdeungpo-gu Seoul 07336 (KR)
(72) Inventor: RYU, Juhyeok, Seoul 06772 (KR); LEE, Kyoungil, Seoul 06772 (KR); LEE, Seunggyu, Seoul 06772 (KR); KIM, Dongwook, Seoul 06772 (KR); LIM, Jaehyuk, Seoul 06772 (KR)
(74) Representative: Vossius & Partner Patentanwälte Rechtsanwälte mbB
(86) International application number: PCT/KR2021/013220
(87) International publication number: WO 2023/048314

(57) **Abstract**

The present embodiment comprises: a housing having an inner space formed therein and disposed below a windshield; an imaging device which is accommodated in the inner space and emits first linearly polarized light in a first direction; an inner mirror which is disposed apart from the imaging device in the inner space and reflects the first linearly polarized light emitted from the imaging device in the first direction; a polarization film which transmits through the first linearly polarized light reflected from the inner mirror and reflects second linearly polarized light in a second direction orthogonal to the first direction; and a phase delay mirror which is disposed outside the inner space and phase-converts, into the second linearly polarized light, the first linearly polarized light that has transmitted through the polarization film after being reflected from the inner mirror, and emits same to the polarization film, wherein the second linearly polarized light emitted from the phase delay mirror is reflected to the windshield by the polarization film, and the first linearly polarized light reflected from the inner mirror transmits through the polarization film and then proceeds to the windshield.

## Description

### TECHNICAL FIELD

The present invention relates to a head-up display, and more specifically, to a head-up display that is capable of being installed in a vehicle.

### BACKGROUND ART

A head-up display may be a device provided in a vehicle to emit image light to a windshield of the vehicle. The head up display for the vehicle may display various information comprising driving information during the driving of the vehicle.

The head-up display comprises a display panel generating and outputting image light and at least one mirror reflecting the image light generated by the display panel.

The image light generated by the display panel may be incident into the windshield of the vehicle by the mirror, and a driver may recognize a virtual image in the front of the windshield.

When the head-up display comprises two image sources, two virtual images may be generated, and in this case, convenience of the head-up display for a vehicle may be improved.

Korea Patent Publication No. KR 10-2015-0093353 A (published on August 18, 2015) discloses a technology for generating two virtual images using two image sources, but in this case, there is a difficult problem that a structure is complicated, power consumption increases, and an overall size increases due to the two image sources.

The head-up display comprises one image source, but is capable of generating two virtual images by providing two optical paths having different total lengths of the optical paths, and a head-up display for a vehicle, which provides two optical paths using one image source, is disclosed in Korean Patent Publication No. 10-1909374 B1 (published on October 17, 2018).

The head-up display for the vehicle comprises: an image source that emits linearly polarized light in a first direction; a prism that refracts some of the linearly polarized light emitted from the image source; an electric polarization conversion element that transmits others of the linearly polarized light emitted from the image source when turned off, and converts others of the linearly polarized light emitted from the image source into linearly polarized light in a second direction perpendicular to the first direction by a half-wavelength when turned on; a first reflection mirror that reflects light to a windshield of the vehicle; a polarization reflection mirror disposed to be spaced apart from the first reflection mirror, reflecting the linearly polarized light in a first direction, and transmitting the linearly polarized light in a second direction; and a second reflection mirror disposed to be spaced apart from the polarization reflection mirror and reflecting the light transmitted through the polarization reflection mirror to the polarization reflection mirror, and the second reflection mirror comprises a flat mirror disposed to face the polarization reflection mirror.

### DISCLOSURE OF THE INVENTION

### TECHNICAL PROBLEM

An object of the present invention is to provide a head-up display that is capable of being compacted by minimizing a height and width.

### TECHNICAL SOLUTION

A head-up display according to the present embodiment may comprise: a housing having an inner space therein and disposed below a windshield; an imaging device which is accommodated in the inner space and emits first linearly polarized light in a first direction; an inner mirror which is disposed to be spaced apart from the imaging device in the inner space and is configured to reflect the first linearly polarized light emitted from the imaging device in the first direction; a polarization film configured to transmit the first linearly polarized light reflected from the inner mirror and reflect second linearly polarized light in a second direction orthogonal to the first direction; and a phase delay mirror which is disposed outside the inner space and is configured to phase-convert the first linearly polarized light transmitted through the polarization film after being reflected from the inner mirror into the second linearly polarized light so as to emit the second linearly polarized light to the polarization film. The second linearly polarized light emitted from the phase delay mirror may be reflected to the windshield by the polarization film. The first linearly polarized light reflected from the inner mirror may be transmitted through the polarization film to proceed to the windshield.

The phase delay mirror may comprise: a 1/4 wavelength phase retarder disposed outside the inner space and facing the polarization film; and an outer mirror disposed in front of the 1/4 wavelength phase retarder.

The inner mirror may comprise: a first inner mirror configured to reflect the first linearly polarized light emitted from the imaging device; and a second inner mirror disposed to be spaced apart from the imaging device so as to reflect the first linearly polarized light reflected from the first inner mirror or reflect the first linearly polarized light emitted from the imaging device.

A first optical path may be provided by the imaging device, the first inner mirror, the polarization film, the 1/4 wavelength phase retarder, the outer mirror, the 1/4 wavelength phase retarder, the polarization film, and the windshield, which are successively connected to each other.

One example of a second optical path may be provided by the imaging device, the first inner mirror, the second inner mirror, the polarization film, and the windshield, which are successively connected to each other.

The other example of the second optical path may be provided by the imaging device, the second inner mirror, the polarization film, and the windshield, which are successively connected to each other.

The first inner mirror may be disposed to reflect the first linearly polarized light toward the phase delay mirror. The polarization film may be disposed between the phase delay mirror and the first inner mirror.

The second inner mirror may be disposed to reflect the first linearly polarized light toward the windshield. The polarization film may be disposed between the phase delay mirror and the first inner mirror.

The imaging device may not aligned with each of the first inner mirror, the second inner mirror, the polarization film, and the phase delay mirror.

A first extension line extending from the first inner mirror and a second extension line extending from the second inner mirror may be intersected at a first inclination angle, and the first inclination angle may be an obtuse angle.

The second extension line and a third extension line extending from the phase delay mirror may be intersected at a second inclination angle, and the second inclination angle may be an obtuse angle.

A fourth extension line extending from the imaging device and the polarization film may be intersected at a third inclination angle. The third inclination angle may be an acute angle.

The imaging device may be disposed to be spaced apart from the polarization film in a vertical direction below the polarization film.

The inner mirror may be disposed to be spaced apart from the polarization film in a vertical direction below the polarization film.

The phase delay mirror may be disposed above the polarization film.

The polarization film may be configured to cover the inner space.

A blind loop on which the phase delay mirror may be disposed is provided at an upper portion of the housing.

A modified example of the inner mirror may comprise: a first inner mirror portion configured to reflect a portion of the first linearly polarized light emitted from the imaging device to the phase delay mirror; and a second inner mirror portion configured to reflect the other potion of the first linearly polarized light emitted from the imaging device to the windshield, wherein the first inner mirror portion and the second inner mirror portion may be integrated with each other and have an obtuse inclination angle.

### ADVANTAGEOUS EFFECTS

According to the embodiment of the present invention, since the phase delay mirror is disposed outside the inner space of the housing, the volume of the inner space and the volume of the housing may be minimized to compact the head-up display.

In addition, since the polarization film covers the inner space of the housing to prevent the foreign substances from being penetrated, a separate cover to cover the inner space of the housing may be unnecessary, the number of components may be minimized, and the structure may be simplified.

### BRIEF DESCRIPTION OF THE DRAWINGS

FIG. 1 is a view illustrating an example of a heat-up display according to the present embodiment,
FIG. 2 is a view for explaining arrangement angles of components of the example of the heat-up display according to the present embodiment,
FIG. 3 is a view illustrating a first virtual image and a second virtual image, which are generated by the example of the head-up display according to the present embodiment,
FIG. 4 is a view illustrating a comparative example of the heat-up display according to the present embodiment,
FIG. 5 is a view illustrating a first modified example of the heat-up display according to the present embodiment,
FIG. 6 is a view illustrating a second modified example of the heat-up display according to the present embodiment, and
FIG. 7 is a view when the second modified example of the head-up display illustrated in FIG. 6 implements only a first virtual image.

### MODE FOR CARRYING OUT THE INVENTION

Hereinafter, detailed embodiments will be described in detail with reference to the accompanying drawings.

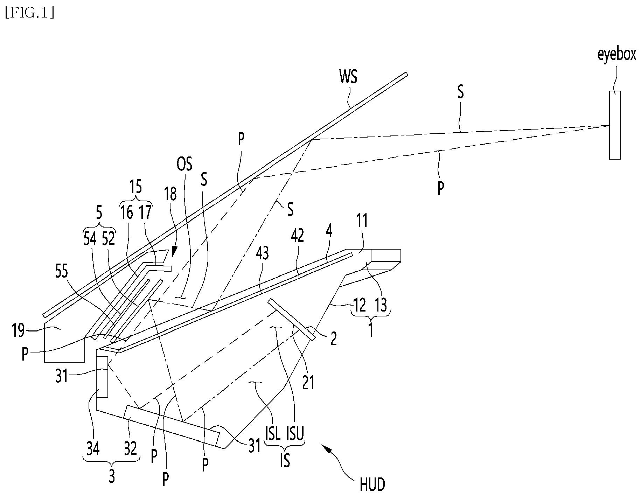

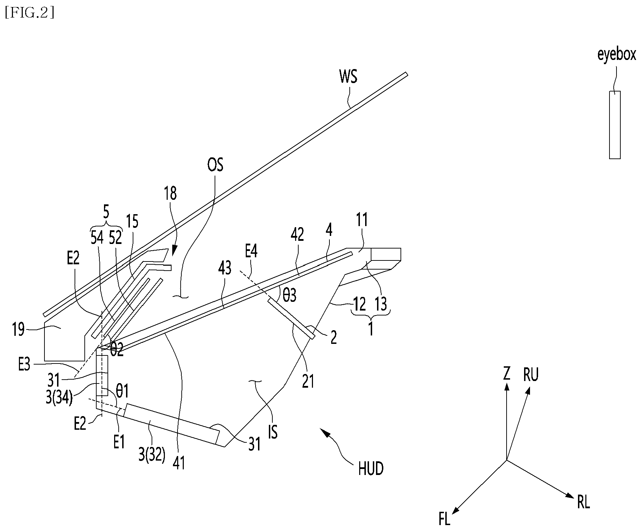

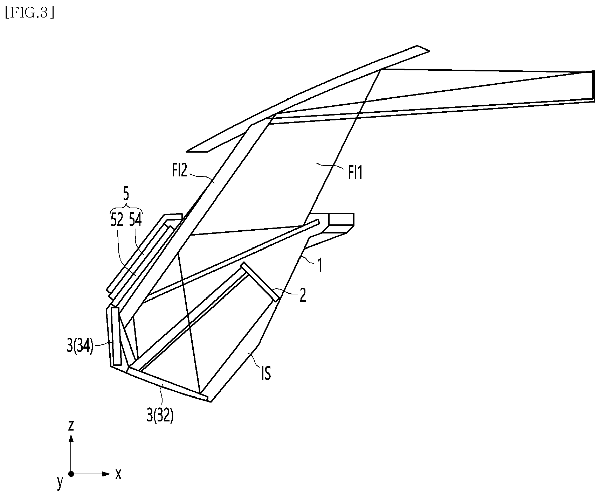

FIG. 1 is a view illustrating an example of a heat-up display according to the present embodiment, FIG. 2 is a view for explaining arrangement angles of components of the example of the heat-up display according to the present embodiment, and FIG. 3 is a view illustrating a first virtual image and a second virtual image, which are generated by the example of the head-up display according to the present embodiment.

A head-up display illustrated in FIGS. 1 to 3 may comprise a housing 1, an imaging device 2, an inner mirror 3, a polarization film 4, and a phase delay mirror 5.

The head-up display HUD may be disposed on a vehicle's instrument panel (IP) to emit light toward a vehicle's windshield WS, the driver may recognize a virtual image disposed in front of the windshield WS, and the head-up display HUD may display a variety of information comprising driving information while the vehicle is driving.

The windshield WS may be configured to protect the driver and ensure visibility at a front surface of the vehicle and may reflect light from the head-up display HUD to the driver's eyes eyebox. The driver's eyes eyebox may be defined as an area on which light from the head-up display HUD is focused.

The housing 1 may be disposed at a lower side of the windshield WS. An inner space IS may be defined inside the housing 1. The housing 1 may have an opening 11 defined in an upper portion thereof.

The housing 1 may be provided as a single member or may be provided as a combination of multiple members. The housing 1 may comprise a lower housing 12, in which the inner space IS is defined, and a top surface thereof is opened, and an upper cover 13 disposed on a top surface of the lower housing 11 and having an opening 11.

A blind loop 15 on which a phase delay mirror 5 is disposed may be provided at an upper portion of the housing 1. The blind loop 15 may be disposed outside the inner space IS. The blind loop 15 may protect the phase delay mirror 5 from the outside of the housing 1.

The blind loop 15 may be a mirror bench on which the phase delay mirror 5 is mounted.

The blind loop 15 may comprise a main blind part 16 on which a phase delay mirror 5 is disposed on a rear surface, and a sub-blind part 17 protruding backward from an upper end of the main blind part 16.

The blind loop 15 may constitute a blind loop assembly 18 together with the phase delay mirror 5, and the blind loop assembly 18 may be disposed between a light trap 19 of the vehicle and the housing 1.

An example of the blind loop assembly 18 may be disposed on the upper portion of the housing 1 to constitute a portion of the head-up display HUD. The blind loop assembly 18 may be spaced apart from the light trap 19.

Another example of the blind loop assembly 18 may be comprised in a configuration of the light trap 19 and may not be comprised in the head-up display HUD.

The imaging device 2 may be accommodated in the inner space IS. The imaging device 2 may emit first linearly polarized light in a first direction.

An example of the imaging device 2 may comprise a display panel that emits image light and a linear polarizer that linearly polarizes the image light emitted from the display panel into the first linearly polarized light in the first direction.

The display panel may realize all types of on-screen pixel display manners, and the display panel may emit the image light toward the linear polarizer. Examples of the display panel may comprise a liquid crystal display (LCD) panels, an organic light emitting diode (OLED) panel, a DLP, an L-cos, a micro LED, a BLU, etc.

The linear polarizer may be installed inside or outside the display panel.

The linear polarizer may only pass the linearly polarized light in the first direction of the image light emitted from the display panel. Non-polarized light may be emitted from the display panel, and the non-polarized light may be polarized in the first direction by the linear polarizer. In the linear polarizer, P-wave linearly polarized light P or S-wave linearly polarized light S may be emitted.

The imaging device 2 may selectively emit the P-wave linearly polarized light P or the S-wave linearly polarized light S depending on the system configuration.

Hereinafter, for convenience of explanation, an example in which the first linearly polarized light emitted from the imaging device 2 is the P-wave linearly polarized light P, and the second linearly polarized light is the S-wave linearly polarized light S will be described, but the reverse case may be also applicable.

The imaging device 2 may be disposed at an upper portion ISU of the inner space IS. The imaging device 2 may comprise an emission surface 21 through which the first linearly polarized light P is emitted.

The imaging device 2 may be disposed to be inclined in the inner space IS. The imaging device 2 may be disposed so that the emission surface 21 faces an inclined direction FL at a front lower side as illustrated in FIG. 2.

The imaging device 2 may not be aligned with each of the inner mirror 3, the polarization film 4, and the phase delay mirror 5.

When the inner mirror 3 comprises a first inner mirror 32 and a second inner mirror 34, the imaging device 2 may not be aligned with each of the first inner mirror 32, the second inner mirror 34, and the polarization film. 4 and the phase delay mirror 5.

The emission surface 21 may face a reflective surface 31 of the inner mirror 3. The first linearly polarized light P emitted from the emission surface 21 may be incident into the reflective surface 31 of the inner mirror 3.

The imaging device 2 may be disposed below the polarization film 4 so as to be spaced apart from the polarization film 4 in a vertical direction Z. The imaging device 2 may be protected by the housing 1 and the polarization film 4.

The inner mirror 3 may reflect the first linearly polarized light P in the first direction, which is emitted from the imaging device 2. The inner mirror 3 may be disposed so that the reflective surface 31 of the inner mirror 3 faces approximately the rear upper direction RU.

The inner mirror 3 may be disposed to be spaced apart from the imaging device 2 in the inner space IS. The inner mirror 3 may be disposed below the polarization film 4 so as to be spaced apart from the polarization film 4 in the vertical direction Z. As illustrated in FIG. 1, the inner mirror 3 may be disposed at a lower portion ISL of the inner space IS.

The inner mirror 3 may be a single inner mirror or may be a plurality of inner mirrors. An example of the inner mirror 3 may comprise a first inner mirror 32 and a second inner mirror 34.

The first inner mirror 32 may be disposed to be spaced apart from the imaging device 1. The first inner mirror 32 may reflect the first linearly polarized light emitted from the imaging device 1.

The first inner mirror 32 may be disposed to reflect the first linearly polarized light P toward the phase delay mirror 5. The first inner mirror 32 may be disposed to reflect the first linearly polarized light P toward the second inner mirror 34.

A portion of the first linearly polarized light P reflected from the first inner mirror 32 may be directed toward the phase delay mirror 5, and the remaining portion of the first linearly polarized light P reflected from the first inner mirror 32 may be directed to the second inner mirror 34.

The first inner mirror 32 may have a reflective surface 31 disposed on a top surface thereof. The first inner mirror 32 may be disposed to be inclined at a predetermined angle in the inner space IS. The first inner mirror 32 may be disposed closer to a horizontal plane than to a vertical plane.

The first inner mirror 32 may be a flat mirror or a curved mirror.

The first inner mirror 32 may change and converge an optical path of a first virtual image FI1 (see FIG. 3) and may be disposed below the polarization film 4 in the vertical direction Z.

The second inner mirror 34 may be disposed to be spaced apart from the imaging device 1. The second inner mirror 34 may reflect (i.e., re-reflect) the first linearly polarized light P reflected from the first inner mirror 32. The second inner mirror 34 may be disposed to reflect the first linearly polarized light P toward the windshield W. The second inner mirror 34 may have a reflective surface 31 disposed on a rear surface thereof. The second inner mirror 34 may be disposed to be inclined at a predetermined angle or vertically in the inner space IS. When the second inner mirror 34 is disposed to be inclined, the second inner mirror 34 may be disposed closer to the vertical plane than to the horizontal plane.

The second inner mirror 34 may be a flat mirror or a curved mirror.

The second inner mirror 34 may change and converge an optical path of the second virtual image FI2 (see FIG. 3) and may be disposed below the polarization film 4 in the vertical direction Z.

The second inner mirror 34 may not reflect the first linearly polarized light P toward the phase delay mirror 5, but reflect the first linearly polarized light P toward an empty space OS behind the phase delay mirror 5. The first linearly polarized light P reflected toward the empty space OS behind the phase delay mirror 5 may not be reflected by the phase delay mirror 5 and may be directed toward the windshield WS.

Referring to FIG. 2, a first extension line E1 extending from the first inner mirror 32 and a second extension line E2 extending from the second inner mirror 34 may be intersected at a first inclination angle Θ1, and the first inclination angle Θ1 may be an obtuse angle. The first extension line E1 may extend from the first inner mirror 32 in the longitudinal direction of the first inner mirror 32. The second extension line E2 may extend from the second inner mirror 34 in a longitudinal direction of the second inner mirror 34. The second extension line E2 extending downward from the second inner mirror 34 and the first extension line E1 extending in the inclined direction of the front upper side from the first inner mirror 32 may be intersected at the first inclination angle Θ1.

The second extension line E2 extending from the second inner mirror 34 and the third extension line E3 extending from the phase delay mirror 5 may be intersected at a second inclination angle θ2, and the second inclination angle θ2 may be an obtuse angle. The second extension line E2 may extend from the second inner mirror 34 in a longitudinal direction of the second inner mirror 34. The third extension line E3 may extend from the phase delay mirror 5 in the longitudinal direction of the phase delay mirror 5. The second extension line E2 extending upward from the second inner mirror 34 and the third extension line E3 extending in the inclined direction toward the front lower side from the phase delay mirror 5 may be intersected at the second inclination angle θ2.

When the inner mirror 3 generates only the first virtual image FI1 and does not generate the second virtual image FI2, the head-up display HUD may display only the first inner mirror 32 without the second inner mirror 34.

The second inner mirror 34 may be installed in addition to the first inner mirror 32 to add a virtual image.

The polarization film 4 may transmit the first linearly polarized light P reflected from the inner mirror 3 and reflect the second linearly polarized light S in the second direction that is orthogonal to the first direction.

The polarization film 4 may be a reflective polarizer or a reflective polarization film.

The polarization film 4 may have a flat or cylindrical shape and may also have a spherical or aspherical shape.

The polarization film 4 may cover the inner space IS. The polarization film 4 may be disposed in the opening 11 of the housing 1. The polarization film 4 may be a cover dust that prevents foreign substances such as dust from penetrated through the opening 11.

An example of the polarization film 4 may have a continuous surface divided into two or more surfaces to prevent external light from being penetrated. The polarization film 4 may have a first surface defined on a side surface and a second surface defined on a front surface, and the first and second surfaces may be continuous surfaces.

A blind cover made of light-absorbing material may be attached to a lower end of the polarization film 4 to minimize the penetration of the external light into the head-up display HUD.

The polarization film 4 may partition an empty space OS disposed behind the phase delay mirror 5 and an inner space 1S.

The empty space OS disposed behind the phase delay mirror 5 may be defined as an outer space OS.

The polarization film 4 may be disposed between the phase delay mirror 5 and the first inner mirror 32. The polarization film 4 may be disposed between the phase delay mirror 5 and the second inner mirror 34. The polarization film 4 may be disposed between the windshield WS and the imaging device 2.

As illustrated in FIG. 2, the polarization film 4 may comprise a front area 41 disposed between the first inner mirror 32 and the phase delay mirror 5 in the vertical direction Z. The polarization film 4 may comprise a rear area 42 disposed between the imaging device 2 and the windshield WS in the vertical direction Z. The polarization film 4 may comprise an intermediate area 43 that is disposed between the front area 41 and the rear area 42 to face the lower portion of the housing 1 in the vertical direction Z.

The polarization film 4 may intersect a fourth extension line E4 extending from the imaging device 2. The fourth extension line E4 extending from the imaging device 2 and the polarization film 4 may be intersected at a third inclination angle θ3, and the third inclination angle θ3 may be an acute angle.

The fourth extension line E4 may extend from the imaging device 2 in the longitudinal direction of the imaging device 2.

The phase delay mirror 5 may be disposed outside the inner space IS. The phase delay mirror 5 may be disposed above the polarization film 4. The phase delay mirror 5 may be disposed to be inclined.

The phase delay mirror 5 may phase convert the first linearly polarized light P, which is reflected from the inner mirror 3 and transmitted through the reflective polarization film 4, into second linearly polarized light S to reflect the second linearly polarized light S to the polarization film 4.

The phase delay mirror 5 may be disposed outside the inner space IS. The phase delay mirror 5 may be disposed above the inner space IS.

The phase delay mirror 5 may delay a phase of the linearly polarized light P emitted from the imaging device 2, and a front surface of the phase delay mirror 5 may be configured to block the external light.

The phase delay mirror 5 may comprise a phase retarder and an outer mirror 54.

The phase retarder may be a 1/4 wavelength phase retarder 52.

The 1/4 wavelength phase retarder 52 may be disposed outside the inner space IS. The 1/4 wavelength phase retarder 52 may be directed toward the polarization film 4. A rear surface of the 1/4 wavelength phase retarder 52 may face an inclined direction RL (see FIG. 2) that is directed toward a rear lower side.

The outer mirror 54 may be disposed in front of the 1/4 wavelength phase retarder 52.

The outer mirror 54 may comprise a reflective surface 55 that reflects light. The reflective surface 55 may be a surface of both sides of the outer mirror 54, which faces the 1/4 wavelength phase retarder 52.

The outer mirror 54 may be disposed to be inclined at a predetermined angle. The reflective surface 55 may face the inclined direction RL that is directed to the rear lower side.

In the head-up display as described above, the first linearly polarized light P (see FIG. 1) reflected from the inner mirror 3, especially the second inner mirror 34, may pass through the polarization film 4 to pass through the space OS defined behind the phase delay mirror 5 so as to proceed to the windshield W.

In addition, the second linearly polarized light S (see FIG. 1) emitted from the phase delay mirror 5 may be reflected to the windshield WS by the polarization film 4.

The head-up display may comprise two optical paths.

The first optical path may successively lead to the imaging device 2, the first inner mirror 32, the polarization film 4, the 1/4 wavelength phase retarder 52, the outer mirror 54, the 1/4 wavelength phase retardant 52, the polarization film 4, and the windshield WS, and the second linearly polarized light S may be incident into the windshield WS.

The second optical path may successively lead to the imaging device 2, the first inner mirror 32, the second inner mirror 34, the polarization film 4, and the windshield WS, and the first linearly polarized light P may be incident into the windshield WS.

A first virtual image FI1 may be generated by the first optical path, and a second virtual image FI2 may be generated by the second optical path.

A length of the first optical path may be longer than that of the second optical path.

The first virtual image FI1 may perform a largescreen AR function at a long distance, and the second virtual image FI2 may perform information transfer at a short distance.

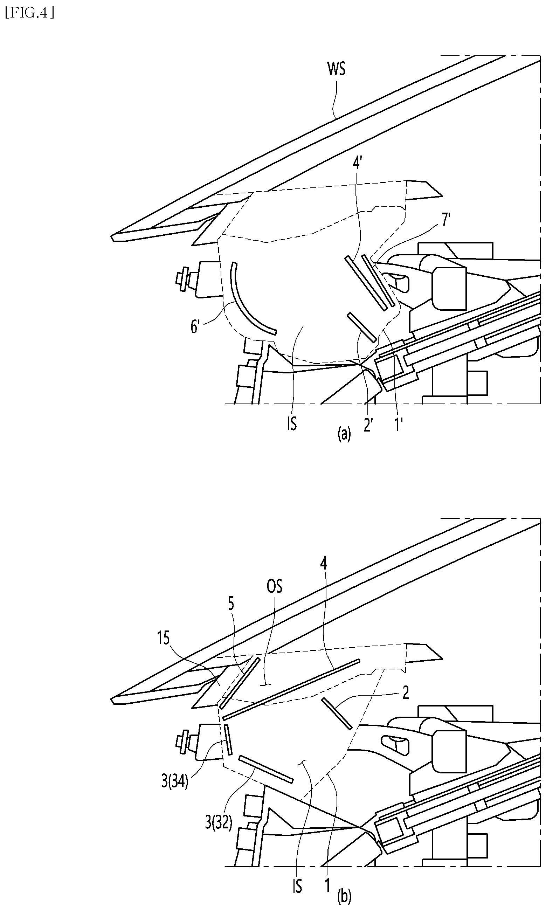

FIG. 4 is a view illustrating a comparative example of the heat-up display according to the present embodiment,

In the comparative example illustrated in (a) of FIG. 4, a polarization reflection mirror 4' may be accommodated in an inner space IS of a housing 1', an imaging device 2' may be disposed at a front lower side or below the polarizing reflection mirror 4', a first reflection mirror 6' that reflects light emitted from the polarization reflection mirror 4' to a windshield WS may be disposed in front of the polarization reflection mirror 4', and a second reflection mirror 6' may be disposed behind the polarization reflection mirror 4'.

In the comparative example illustrated in (a) of FIG. 4, the housing 1' may accommodate the polarization reflection mirror 4' and both the first reflection mirror 6' and the second reflection mirror 6', and thus, an inner space IS having a large volume may be required.

On the other hand, in the head-up display HUD according to the present embodiment illustrated in (b) of FIG. 4, since a phase delay mirror 5 is disposed outside the inner space IS of the housing 1, and the polarization film 4 is disposed above the inner space IS of the housing 1, sizes of the inner space IS and housing 1 may not need to be large as in the comparative example, and a space occupied by the housing 1 within an instrument panel IP may also be small.

In the comparative example, the space disposed at an upper side of the housing 1 may be defined as an outer space OS, and Table 1 shows results obtained by comparing a volume according to the comparative example to a volume according to the present example.

**[Table 1]**

| | Comparative example | The present embodiment | Reduction rate |
|---|---|---|---|
| OS Volume | 5L | 5L | |
| IS Volume | 15.5L | 9L | -42% |
| Total volume | 20.5L | 14L | -32% |

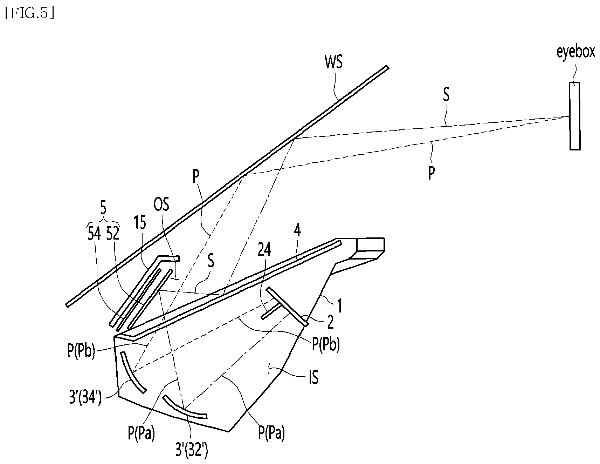

FIG. 5 is a view illustrating a first modified example of the heat-up display according to the present embodiment.

The head-up display HUD illustrated in FIG. 5 may have an inner mirror 3' different from the configuration of the inner mirror 3 illustrated in FIGS. 1 to 3.

The second inner mirror 34' may reflect the first linearly polarized light P emitted from the imaging device 2.

In the head up display HUD, a first inner mirror 32' may be disposed to be spaced apart from the imaging device 2 to reflect a portion Pa of the first linearly polarized light P emitted from the imaging device 2. The second inner mirror 34' may be disposed to be spaced apart from the imaging device 2 to reflect the remaining portion Pb of the first linearly polarized light P emitted from the imaging device 2.

The portion Pa of the first linearly polarized light P reflected from the second inner mirror 34' may pass through the polarization film 4 and then be converted into the second linearly polarized light S by the phase delay mirror 5. The second linearly polarized light S may be reflected to the windshield WS by the polarization film 4.

The remaining portion Pb of the first linearly polarized light P reflected from the second inner mirror 34' may pass through the empty space OS behind the phase delay mirror 5 to proceed to the windshield WS.

The head-up display HUD may further comprise a blind 24 accommodated in the inner space IS. The blind 24 may be disposed to be approximately orthogonal to the imaging device 2 and may guide the portion Pa of the first linearly polarized light P emitted from the imaging device 2 to the first inner mirror 32' and may guide the remaining portion Pb of the first linearly polarized light P emitted from the imaging device 2 to the second inner mirror 34'.

A configuration and operation of the housing 1, the imaging device 2, the polarizing film 4, and the phase retardation mirror 5 other than the first inner mirror 32' and the second inner mirror 34' may be the same as or similar to an example of the head-up display illustrated in FIGS. 1 to 3, and to avoid duplicated description, the same symbols may be used, and detailed descriptions thereof will be omitted.

The head-up display HUD may have a first optical path and a second optical path.

The first optical path may successively lead to the imaging device 2, the first inner mirror 32', the polarization film 4, the 1/4 wavelength phase retarder 52, the outer mirror 54, the 1/4 wavelength phase retardant 54, the polarization film 4, and the windshield WS, and a first virtual image may be implemented.

The second optical path may lead to the imaging device 2, the second inner mirror 34', the polarization film 4, and the windshield WS, and a second virtual image may be implemented.

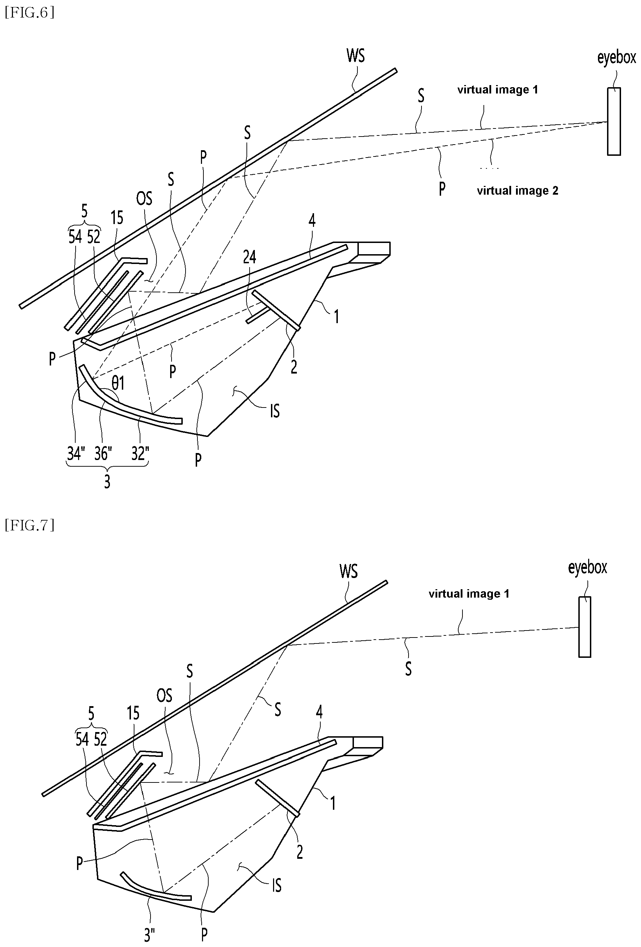

FIG. 6 is a view illustrating a second modified example of the heat-up display according to the present embodiment, and FIG. 7 is a view when the second modified example of the head-up display illustrated in FIG. 6 implements only a first virtual image.

The head-up display illustrated in FIG. 6 may be provided with one inner mirror 3", and a configuration and operation of the housing 1, the imaging device 2, the polarizing film 4, and the phase retardation mirror 5 other than one inner mirror 3" may be the same as or similar to an example of the head-up display illustrated in FIG. 5, and to avoid duplicated description, the same symbols may be used, and detailed descriptions thereof will be omitted.

The inner mirror 3" illustrated in FIG. 6 may comprise a first inner mirror portion 32" and a second inner mirror portion 34", and the first inner mirror portion 32" and a second inner mirror portion 34" may be integrated with each other. The first inner mirror portion 32" and the second inner mirror portion 34" may have an obtuse inclination angle θ4.

Like the first inner mirror 32 illustrated in FIG. 5, the first inner mirror portion 32" may reflect a portion PA of the first linearly polarized light P emitted from the imaging device 2 to the phase delay mirror 5.

Like the second inner mirror 34 illustrated in FIG. 5, the second inner mirror portion 34" may reflect the remaining portion Pb of the first linearly polarized light P emitted from the imaging device 2 to the windshield WS.

The inner mirror 3" illustrated in FIG. 6 may be a curved mirror having a curved overall shape. A lower portion of the curved mirror may be the first inner mirror portion 32", and an upper portion of the curved mirror may be the second inner mirror portion 34".

The inner mirror 3" may comprise a connecting mirror portion 36" connecting the first inner mirror portion 32" to the second inner mirror portion 34".

A first extension line extending from the first inner mirror portion 32" and a second extension line extending from the second inner mirror portion 34" may be intersected at a first inclination angle Θ1, and the first inclination angle Θ1 may be an obtuse angle.

Each of the first inner mirror portion 32" and the second inner mirror portion 34" may be provided in a flat shape or an arc shape.

The connecting mirror portion 36" may be provided in an arc shape.

In the second modified example of the head-up display, a first virtual image and a second virtual image may be implemented together as illustrated in FIG. 6, and only a first virtual image may be implemented as illustrated in FIG. 7.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being comprised in the present invention.

## Claims

1. A head-up display comprising:
a housing having an inner space therein and disposed below a windshield;p
an imaging device which is accommodated in the inner space and emits first linearly polarized light in a first direction;
an inner mirror which is disposed to be spaced apart from the imaging device in the inner space and is configured to reflect the first linearly polarized light emitted from the imaging device in the first direction;
a polarization film configured to transmit the first linearly polarized light reflected from the inner mirror and reflect second linearly polarized light in a second direction orthogonal to the first direction; and
a phase delay mirror which is disposed outside the inner space and is configured to phase-convert the first linearly polarized light transmitted through the polarization film after being reflected from the inner mirror into the second linearly polarized light so as to emit the second linearly polarized light to the polarization film,
wherein the second linearly polarized light emitted from the phase delay mirror is reflected to the windshield by the polarization film, and
the first linearly polarized light reflected from the inner mirror is transmitted through the polarization film to proceed to the windshield.

2. The head-up display according to claim 1, wherein the phase delay mirror comprises:
a 1/4 wavelength phase retarder disposed outside the inner space and facing the polarization film; and
an outer mirror disposed in front of the 1/4 wavelength phase retarder.

3. The head-up display according to claim 2, wherein the inner mirror comprises:
a first inner mirror configured to reflect the first linearly polarized light emitted from the imaging device; and
a second inner mirror disposed to be spaced apart from the imaging device so as to reflect the first linearly polarized light reflected from the first inner mirror or reflect the first linearly polarized light emitted from the imaging device.

4. The head-up display according to claim 3, further comprising:
a first optical path through which the imaging device, the first inner mirror, the polarization film, the 1/4 wavelength phase retarder, the outer mirror, the 1/4 wavelength phase retarder, the polarization film, and the windshield are successively connected to each other and a second optical path through which the imaging device, the first inner mirror, the second inner mirror, the polarization film, and the windshield are successively connected to each other.

5. The head-up display according to claim 3, further comprising:
a first optical path through which the imaging device, the first inner mirror, the polarization film, the 1/4 wavelength phase retarder, the outer mirror, the 1/4 wavelength phase retarder, the polarization film, and the windshield are successively connected to each other and a second optical path through which the imaging device, the second inner mirror, the polarization film, and the windshield are successively connected to each other.

6. The head-up display according to claim 3, wherein the first inner mirror is disposed to reflect the first linearly polarized light toward the phase delay mirror, and
the polarization film is disposed between the phase delay mirror and the first inner mirror.

7. The head-up display according to claim 3, wherein the second inner mirror is disposed to reflect the first linearly polarized light toward the windshield, and
the polarization film is disposed between the phase delay mirror and the first inner mirror.

8. The head-up display according to claim 3, wherein the imaging device is not aligned with each of the first inner mirror, the second inner mirror, the polarization film, and the phase delay mirror.

9. The head-up display according to claim 3, wherein a first extension line extending from the first inner mirror and a second extension line extending from the second inner mirror are intersected at a first inclination angle, and
the first inclination angle is an obtuse angle.

10. The head-up display according to claim 9, wherein the second extension line and a third extension line extending from the phase delay mirror are intersected at a second inclination angle, and
the second inclination angle is an obtuse angle.

11. The head-up display according to claim 10, wherein a fourth extension line extending from the imaging device and the polarization film are intersected at a third inclination angle, and
the third inclination angle is an acute angle.

12. The head-up display according to claim 1, wherein the inner mirror comprises:
a first inner mirror portion configured to reflect a portion of the first linearly polarized light emitted from the imaging device to the phase delay mirror; and
a second inner mirror portion configured to reflect the other potion of the first linearly polarized light emitted from the imaging device to the windshield,
wherein the first inner mirror portion and the second inner mirror portion are integrated with each other and have an obtuse inclination angle.

13. The head-up display according to claim 1, wherein the imaging device is disposed to be spaced apart from the polarization film in a vertical direction below the polarization film.

14. The head-up display according to claim 1, wherein the inner mirror is disposed to be spaced apart from the polarization film in a vertical direction below the polarization film.

15. The head-up display according to claim 1, wherein the phase delay mirror is disposed above the polarization film.

16. The head-up display according to claim 1, wherein the polarization film is configured to cover the inner space.

17. The head-up display according to claim 1, wherein a blind loop on which the phase delay mirror is disposed is provided at an upper portion of the housing.
